# EUROPEAN PATENT APPLICATION

(11) **EP 2 180 494 A1**
(43) Date of publication of application: **28.04.2010**
(21) Application number: 09173654.6
(22) Date of filing: 21.10.2009
(51) Int. Cl.: H01H 50/04

(54) **Tool free auxiliary contact block**

(30) Priority: 27.10.2008 US 258580
(71) Applicant: General Electric Company, Schenectady, NY 12345 (US)
(72) Inventor: Bist, Mohan Singh, 560036, Karnataka (IN); Chandrappa, Namitha, 560078, Karnataka (IN); Sundaram, G. Kalyana, 560034, Karnataka (IN)
(74) Representative: Illingworth-Law, William Illingworth

(57) **Abstract**

The present invention relates to an auxiliary contact block (200) and to a tool free latching mechanism. The auxiliary contact block (200) has a housing and a tool free latching mechanism. The tool free latching mechanism has a stationary member (214) integral to the housing and a latching bar (316).

## Description

### BACKGROUND OF THE INVENTION

This invention relates generally to global contactors and specifically to a tool free latching mechanism for a lateral auxiliary contact block.

A conventional electrical contactor in one form typically comprises an electromagnetically actuated device having a magnetic core proximate an armature. Typically, a coil is electrically energized to draw the armature to the magnetic core. The electromagnetically actuated device may be a control relay, a contactor, a motor starter and the like. The armature is operatively associated with a movable device such as an actuator. With an electrical switching apparatus the actuator operates a contact assembly.

A contact assembly may be an integral component of the electrical switching apparatus or it may be an auxiliary device to be added thereto. In either case, the contact assembly typically includes a contact having a pair of stationary contacts and a movable contact. The stationary contacts are fixedly mounted in spaced relation with one another. The movable contact is mounted to the pusher. The contact assembly may provide for normally open contact operation or normally closed contact operation. In some conventional contact designs a different geometry stationary contact is used for normally open and normally closed stationary contact.

A contact block (also referred to herein as "contactor") may include a multitude of contacts. However, if additional contacts are required an additional contact block must be added or an auxiliary contact block is added to the end of the contact block. The auxiliary contact block is secured by screws to the contact block or contactor. In this configuration either the entire contact block must be removed and replaced or additional contact blocks may be added and secured by screws to increase the number of contact units.

Additionally, different variations of contact assemblies may require the availability of multiple pusher or auxiliary contact block designs based on the location and orientation of the movable contacts. For example, both contacts can be normally opened, both contacts can be normally closed, one contact can be normally open and the other normally closed. Additionally, the timing of one contact opening and the other closing can also be altered. These variations necessitate additional parts inventory resulting in loss of economies of scale.

Accordingly, there is a need for an auxiliary contact assembly for use in an electrical switching apparatus designed to facilitate ease of use, and minimize installation and inventory cost.

### BRIEF DESCRIPTION OF THE INVENTION

In one aspect, the present invention relates to an auxiliary contact block. The auxiliary contact block comprising a housing and a tool free latching mechanism. The tool free latching mechanism further comprises a stationary member integral to the housing and a latching bar. The latching bar is a movable member which operated from the side of the auxiliary contact block by applying pressure to the movable member while fitting and unfitting it to the contactor.

In another aspect of the invention, a tool free mechanism for an auxiliary contact block comprises a first stationary member and a second moveable member, wherein pressure on the movable member moves it from a first rested position to a second released position.

### BRIEF DESCRIPTION OF THE DRAWINGS

Figure 1 is a perspective view of a contactor as is known in the industry.

Figure 2 is a perspective view of an auxiliary contact block according to an aspect of the invention.

Figure 3a is an exploded view of a contact block assembly comprising a contactor and an auxiliary contact block.

Figure 3b is a perspective view of a contactor connected to an auxiliary contact block to form a contact block assembly.

Figure 4 is a cutaway view of an embodiment of the auxiliary contact block of Figure 2.

Figure 5 is a perspective view of an embodiment of the latching bar mounting block of the auxiliary contact block of Figure 2.

Figure 6 is cross-sectional view of Figure 3b.

Figure 7 is another cross-sectional view of Figure 3b.

### DETAILED DESCRIPTION OF THE INVENTION

It is contemplated that the teaching of the description set forth below is applicable to electric contact blocks and auxiliary contact blocks, including but not limited to normally open, normally closed, relay, timer or a motor starter contact. The present invention is therefore not intended to be limited to any particular type of electrical contact, such as contact 100.

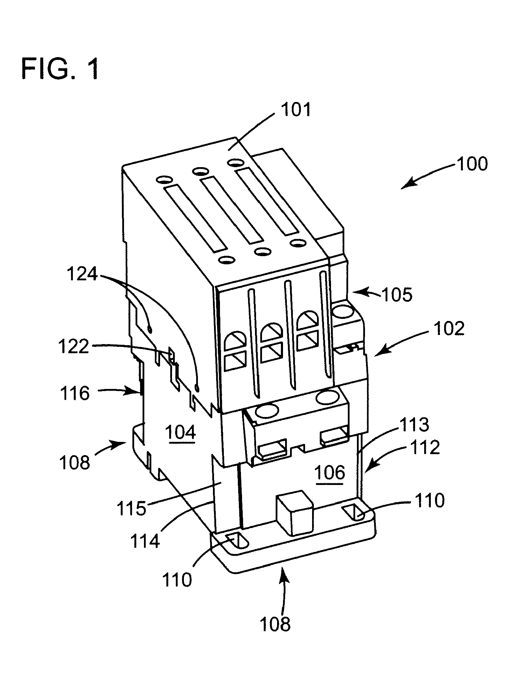

Figure 1 illustrates a contactor 100 as is known in the industry. The operation of contactors is known in the industry and will not be described in detail. Contactor 100 may be any shape but generally has top 101, front 106, back (not visible), and right and left sides 104, 105 respectively.

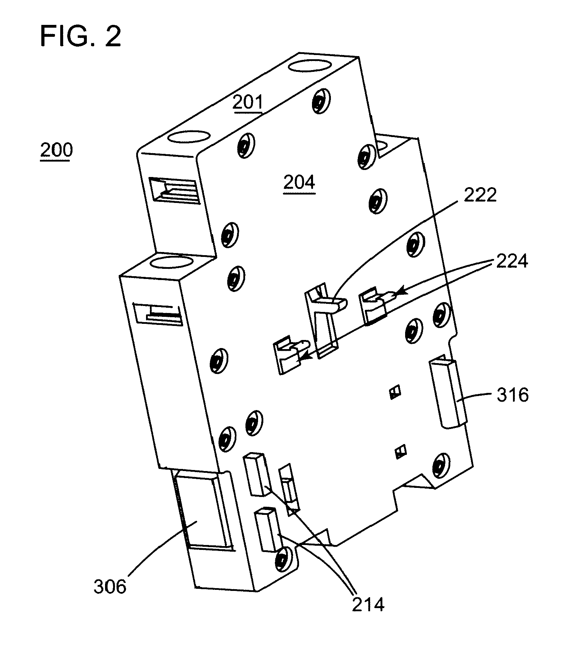

Front 106 and back (not visible) comprise at least one port for interconnecting wires for communication with an electric circuit. Feet 108 provide means 110 for securing contactor 100 to an enclosure by screws or bolts. Edge 114 defines an interface between side 104 and front 106. Edge 114 is flush with side 104 and contains lip 115 which defines a protrusion higher than the general surface of front 106. Similarly, edge 116 defines an interface between side 104 and the back. Edge 116 is flush with side 104 and contains a lip (not shown) which defines a protrusion higher than the general surface of the back. Opposite edge 116 is an edge (not shown) defining an interface between side 102 and the back. The edge is flush with side 102 and contains a lip (not shown) which defines a protrusion higher than the general surface of the back. Opposite edge 114 is edge 112 defining an interface between side 102 and front 106. Edge 112 is flush with side 102 and contains a lip 113 which defines a protrusion higher than the general surface of front 106. Side 104 contains a series of divots 124 for mating with locating hooks (see figure 2 reference number 224) on an auxiliary contact block (shown in Figure 2). Port 122 transmits a mechanical signal from contact block 100 to auxiliary contact block 200 (shown in Figure 2).

Figure 2 is a perspective view of an auxiliary contact block according to an aspect of the invention. When auxiliary contact block 200 is positioned with contactor 100 side 204 is proximate to side 104. Locating hooks 224 are dimensioned to correspond with divots 124 (see Figure 1) to thereby position the auxiliary contact block 200 adjacent to contact block 100. Lever 222 interfaces with port 122 to transmit mechanical movement of the internal contacts as is known in the art. Locating hooks 222 further prevent movement of the auxiliary contact block during operation.

Stationary member 214 interfaces with edge 114 and is formed to hook over lip 115. Stationary member 214 is made integral to side 204 and may comprise one or more stationary members as shown. Latching bar 316 interfaces with contactor 100 at edge 116 (see Figure 1) and corresponding lip (not shown) similar to the interface of the stationary member 214 with edge 114 and lip 115. When at rest, latching bar 316 is at a first position (as shown) and button 306, which is located at side 206 and projects from auxiliary contact block 200. Pressure applied to button 306, e.g., via thumb or forefinger, causes the button 306 to regress into the auxiliary contact block 200. In turn, the latching bar 316 translates to a second position (not shown). The first position is relatively closer to the stationary members 214 then the second position.

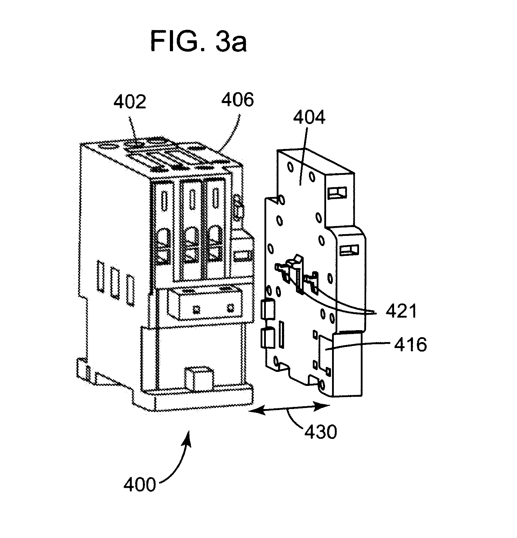

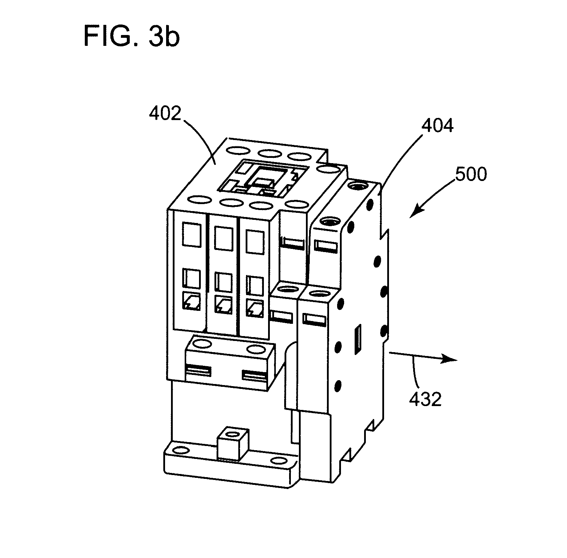

Referring to Figure 3a, an exploded view of a contactor assembly is shown generally at 400. In this exemplary embodiment, the contactor 402 is shown with auxiliary block 404. Right side 406 is positioned adjacent the contactor 402, and is configured to mate with contactor 402 on the contactors right side 406. Locating hooks 421 correspond to divots on the contactor (see Figure 1), and latching bar 416 corresponds to divots on the contactor. An operator may hold the auxiliary block 404 and apply pressure to the button (not shown) to move the latching bar to a second position. The operator may then connect the auxiliary block to the contactor by removing the pressure from the button, thereby moving the latching bar into a first position. The contactor 402 and the auxiliary block 404 then remain mated, as shown via line 430, to form the contact assembly as shown in Figure 3b at 500.

An operator may also remove the auxiliary contact block from the contactor by applying pressure to the button (not shown) and pulling the auxiliary contact block away from the contactor, as shown by line 432 in Figure 3b. In this way, the auxiliary block can be attached before it is mounted to a dinrail.

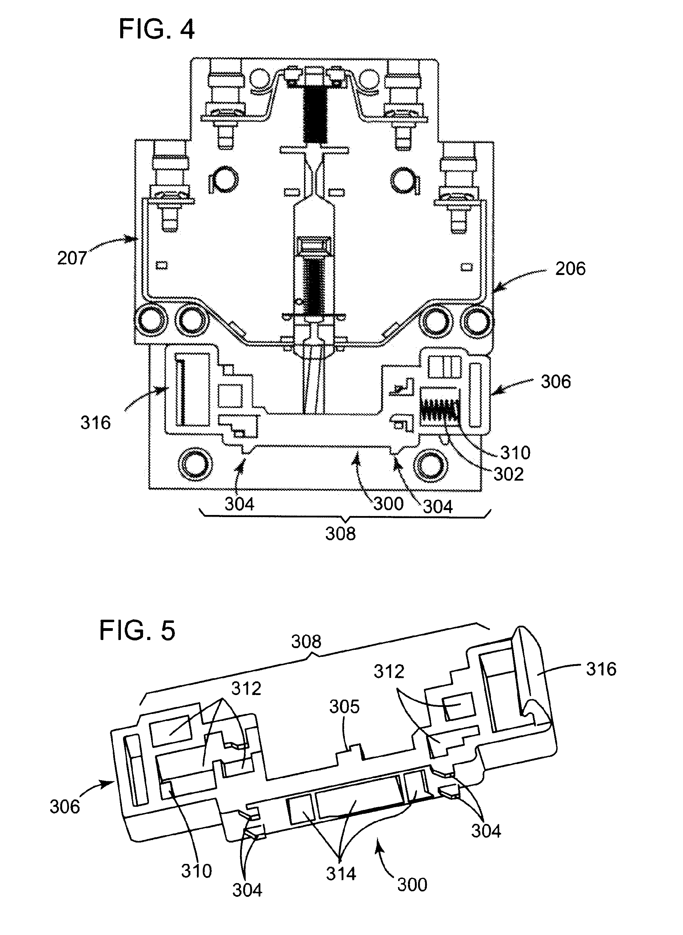

As shown in the cutaway view of Figure 4 the tool free mechanism is made from a single unitary moveable member 300. Movable member 300 comprises the button 306, a latching bar 316 and a central body 308 as shown in Figure 4 and in more detail in Figure 5. Central body 308 provides a means for transmitting the movement of button 306, via pressure applied by an operator, to a translation of the latching bar 316 and for locating and positioning the latching bar 316 in the housing of contactor 100. Locating hooks 304 provide a means for maintaining the position of the movable 300. Locating hooks 304 slide in tapered walls or divots (not shown in detail) in the housing of the auxiliary contact block 200.

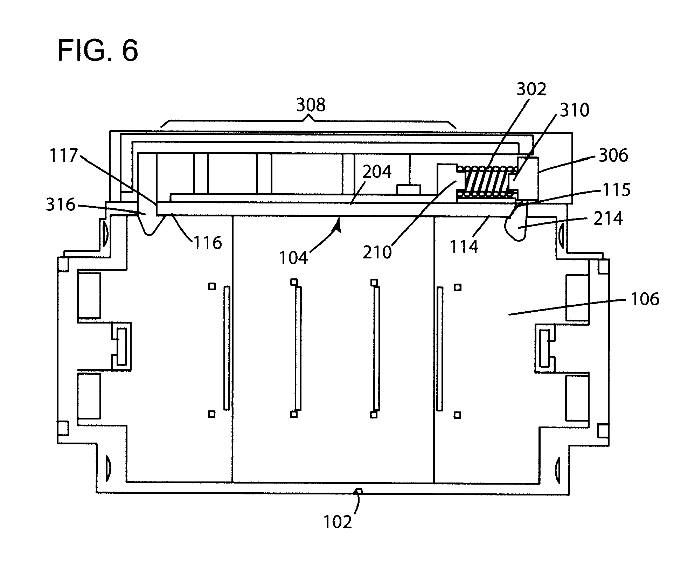

Spring 302 provides a resisting force to the movement of the latching bar 316 and provides the necessary force to hold the latching bar in a first rested position. Spring 310 is compressed between spring pin 310 on moveable member 300 and a similar spring pin (shown in Figure 6 as 210) on the housing of auxiliary contact block 200 such that movement of the button 306 by pressure to a position more internal to the housing of the auxiliary contact block 200 further compresses the spring. Releasing the pressure permits the spring to expand returning the button 306 to a position more protruding from the housing of the auxiliary contact block 200.

To reduce weight and material of the movable member 300, webbing 312 and 314 may be included. Webbing 312 and 314 may be necessary to avoid internal features of the auxiliary contact block 200. Webbing 312 and 314 may be in any configuration; however, the rigidity of the central body 308 should be maintained to facilitate the primary function of translating the movement of the button 306 to the latching bar 316.

Figure 6 is a cross-sectional view of Figure 3b. Figure 6 shows the auxiliary contact block 200 of Figure 2 mated to a contact block 100 of Figure 1. Side 204 is proximate to side 104. Stationary member214 hooks over lip 115 at edge 114. Latching bar 316 hooks over lip 117 at edge 116 when in the first rested position, as shown. When pressure is applied to button 306, spring 302 is compressed between spring pins 210 and 310. As the spring 302 is compressed central body 308 translates the movement of button 306 to the latching bar 316. Latching bar 316 disengages from lip 117 at edge 116 releasing the auxiliary contact block 200 from contact block 100.

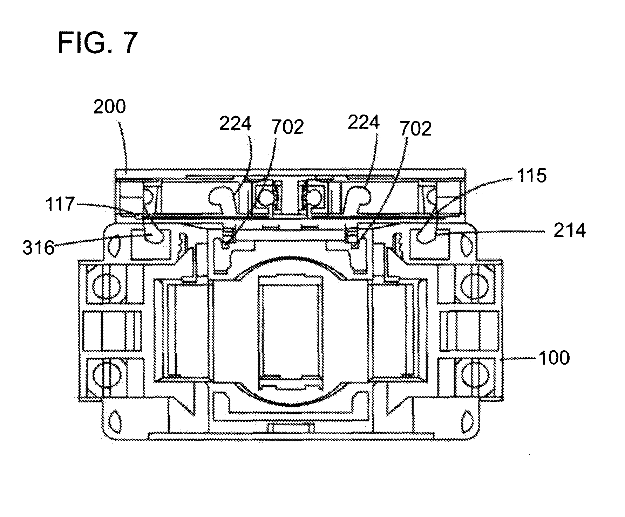

Figure 7 is another cross-sectional view of Figure 3b. In this particular cross-section, locating hooks 224 hook over protrusions 702 to ensure robust mating of the auxiliary contact block 200 to contactor 100. Stationary member 214 is also shown and hooks over lip 115, while latching bar 316 hooks over lip 117 at 116 when in the first rested position, as shown with reference to Figure 6.

While the invention has been described in terms of various specific embodiments, those skilled in the art will recognize that the invention can be practiced with modification within the spirit and scope of the claims.

## Claims

1. An auxiliary contact block (200) comprising:
a housing; and
a tool free latching mechanism the tool free latching mechanism comprising:
a stationary member (214) integral to the housing; and
a latching bar (316).

2. The auxiliary contact block (200) of claim 1, further comprising a spring compressed between the stationary member (214) and a movable member (300).

3. The auxiliary contact block (200) of claim 1 or claim 2, further comprising a movable member (300), wherein the movable member (300) comprises:
a central body (308);
a button (306) located at a first end of the central body (308); and
a latching bar (316) connected at a first side of the central body (308).

4. The auxiliary contact block (200) of any one of the preceding claims, further comprising webbing (312, 314), wherein the webbing (312, 314) is configured to provide rigidity to facilitate the movement of the button (306) to translate to movement of the latching bar (316).

5. A tool free latching mechanism for an auxiliary contact block (200) comprising;
a stationary member (214); and
a movable member (300), wherein application of pressure on the movable member (300) moves it from a first rested position to a second released position.

6. The tool free latching mechanism of claim 5, wherein during the first rested position the auxiliary contact block (200) is configured to be mated with a contactor (100).

7. The tool free latching mechanism of claim 5 or claim 6, wherein during the second released position, the auxiliary contact block (200) is removable from the contactor (100).

8. The tool free latching mechanism of any one of claims 5 to 7, wherein the movable member (300) comprises:
a central body (308);
a button (306) located at a first end of the central body (308); and
a latching bar (316) connected at a first side of the central body (308).

9. The tool free latching mechanism of any one of claims 5 to 8, further comprising webbing (312, 314), wherein the webbing (312, 314) is configured to provide rigidity to facilitate the movement of the button (306) to translate to movement of the latching bar (316).

10. The tool free latching mechanism of any one of claims 5 to 9, further comprising a spring (302) compressed between the stationary member (214) and the movable member (300).
